# EUROPEAN PATENT APPLICATION

(11) **EP 4 637 006 A1**
(43) Date of publication of application: **22.10.2025**
(21) Application number: 25167612.8
(22) Date of filing: 01.04.2025
(51) Int. Cl.: H02K 33/16

(54) **VIBRATORY LINEAR ACTUATOR AND ELECTRIC TOOTHBRUSH**

(30) Priority: 16.04.2024 JP 2024066199
(71) Applicant: Panasonic Intellectual Property Management Co., Ltd., Kadoma-shi, Osaka 571-0057 (JP)
(72) Inventor: GOTO, Ryuma, Osaka, 571-0057 (JP); YOSHIMOTO, Takamichi, Osaka, 571-0057 (JP); ASAI, Yasuyoshi, Osaka, 571-0057 (JP); MORIGUCHI, Masashi, Osaka, 571-0057 (JP); KOBAYASHI, Noboru, Osaka, 571-0057 (JP)
(74) Representative: Novagraaf International SA

(57) **Abstract**

The present disclosure provides a vibratory linear actuator and an electric toothbrush in which a first movable body and a second movable body can reciprocate with more complicated movement. A vibratory linear actuator (40) according to the present disclosure include an electromagnetic block (50) including an electromagnet (52) and a magnetic block (60) including a permanent magnet (63). The magnetic block (60) includes a first movable body (61) and a second movable body (62), and a thrust acting on the first movable (60) body is different from a thrust acting on the second movable body (62). The vibratory linear actuator (40) is configured such that when a voltage having a waveform in which two different waveforms have been superimposed is applied to the electromagnet (52), while the first movable body (61) and the second movable body (62) reciprocate at a frequency at which an amplitude increases in an opposite phases, the first movable body (61) and the second movable body (62) reciprocate at a frequency at which the amplitude increases in the same phase.

## Description

### BACKGROUND

### 1. Technical Field

The present disclosure relates to a vibratory linear actuator and an electric toothbrush.

### 2. Description of the Related Art

In related art, as disclosed in PTL 1, a vibratory linear actuator which includes an electromagnetic block having an electromagnet and a magnetic block having a permanent magnet disposed to face the electromagnet with a gap interposed therebetween is known. In the vibratory linear actuator, an electromagnetic force acts between the electromagnetic block and the magnetic block to reciprocate the magnetic block relatively with respect to the electromagnetic block.

In PTL 1, the magnetic block includes a first movable body having a permanent magnet disposed to face an electromagnet with a gap interposed therebetween, and a second movable body having a permanent magnet disposed to face the electromagnet with a gap interposed therebetween. A magnetic field that periodically fluctuates is generated between the electromagnetic block and the first movable body and between the electromagnetic block and the second movable body, and thus, the first movable body and the second movable body reciprocate in phases opposite to each other.

### Citation List

### Patent Literature

PTL 1: Unexamined Japanese Patent Publication No. 2014-128187

### SUMMARY

In such a vibratory linear actuator, it is preferable that the first movable body and the second movable body can reciprocate with more complicated movement.

Therefore, an object of the present disclosure is to obtain a vibratory linear actuator and an electric toothbrush in which a first movable body and a second movable body can reciprocate with more complicated movement.

A vibratory linear actuator according to an aspect of the present disclosure includes an electromagnetic block including an electromagnet and a magnetic block including a permanent magnet disposed to face the electromagnet in such a way that a gap is formed between the permanent magnet and the electromagnet. The magnetic block is configured to be reciprocated in a first direction relatively with respect to the electromagnetic block by a periodically fluctuating magnetic field. The magnetic block includes a first movable body coupled to the electromagnetic block with a first spring, and a second movable body coupled to the first movable body with a second spring. The first movable body and the second movable body are configured such that the first movable body and the second movable body reciprocate at a frequency at which an amplitude increases in an opposite phase while the first movable body and the second movable body reciprocate at a frequency at which an amplitude increases in the same phase, when a voltage having a waveform in which two different waveforms have been superimposed is applied to the electromagnet in a state where a thrust acting on the first movable body and a thrust acting on the second movable body are different from each other.

An electric toothbrush according to an aspect of the present disclosure includes the vibratory linear actuator, and a handle having a brush and connected to the first movable body or the second movable body.

The present disclosure provides the vibratory linear actuator and the electric toothbrush in which the first movable body and the second movable body can reciprocate with more complicated movement.

### BRIEF DESCRIPTION OF THE DRAWINGS

Fig. 1 is a side view illustrating an example of an electric toothbrush according to an exemplary embodiment;
Fig. 2 is a perspective view illustrating an example of a vibratory linear actuator structure according to the exemplary embodiment;
Fig. 3 is a perspective view illustrating an example of a vibratory linear actuator according to the exemplary embodiment;
Fig. 4 is a plan view illustrating an example of the vibratory linear actuator according to the exemplary embodiment;
Fig. 5 is a side view illustrating an example of the vibratory linear actuator according to the exemplary embodiment;
Fig. 6 is a rear view illustrating an example of the vibratory linear actuator according to the exemplary embodiment;
Fig. 7 is a front view illustrating an example of the vibratory linear actuator according to the exemplary embodiment;
Fig. 8 is a back view illustrating an example of the vibratory linear actuator according to the exemplary embodiment;
Fig. 9 is a diagram schematically illustrating a vibration model of an example of the vibratory linear actuator according to the exemplary embodiment;
Fig. 10 is a diagram illustrating frequency characteristics of a first movable body and a second movable body according to the exemplary embodiment;
Fig. 11 is a diagram illustrating a waveform of a voltage applied to an electromagnet according to the exemplary embodiment;
Fig. 12 is a diagram schematically illustrating a vibration model of an example of the vibratory linear actuator structure according to the exemplary embodiment;
Fig. 13 is a diagram illustrating an output waveform of a first movable block according to the exemplary embodiment;
Fig. 14 is a plan view illustrating an example of the vibratory linear actuator according to a variation; and
Fig. 15 is a diagram schematically illustrating a vibration model of an example of a vibratory linear actuator according to the variation.

### DETAILED DESCRIPTIONS

Hereinafter, exemplary embodiments will be described in detail with reference to the drawings. However, unnecessarily detailed description may be omitted. For example, a detailed description of a well-known matter or a repeated description of a substantially identical configuration may be omitted.

Note that, the accompanying drawings and the following descriptions are only provided to facilitate a person skilled in the art to fully understand the present disclosure, and are not intended to limit the subject matters as defined in the claims.

In addition, in the following exemplary embodiments, a vibratory linear actuator used for an electric toothbrush (that is, an example of an oral hygiene device) as a personal care product is exemplified.

In addition, in the following exemplary embodiments, a direction in which a first movable body and a second movable body reciprocate will be described as an X direction, a direction in which an electromagnet and a permanent magnet face each other will be described as a Z direction, and a direction intersecting (for example, orthogonal to) the X direction and the Z direction will be described as a Y direction. The X direction is also referred to as a front-rear direction, a first direction, or an axial direction of an output shaft. The Y direction is also referred to as a width direction or a third direction. The Z direction is also referred to as an up-down direction or a second direction.

The description will be given with defining the up-down direction of the vibratory linear actuator in a state where the electromagnet is positioned on a lower side and the permanent magnet is positioned on an upper side.

In addition, in the following exemplary embodiments, a side where the output shaft protrudes is defined as a front side of the vibratory linear actuator (that is, a front side in the X direction) for the sake of convenience.

### (Exemplary embodiment)

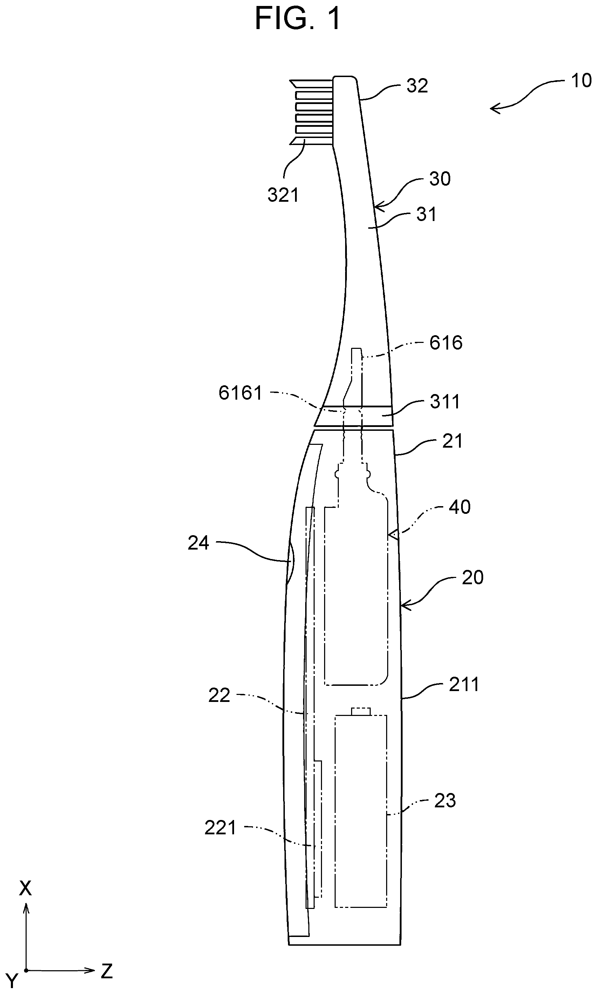

Fig. 1 is a side view illustrating an example of electric toothbrush 10 according to an exemplary embodiment. As illustrated in Fig. 1, electric toothbrush 10 (that is, an example of the oral hygiene device) according to the present exemplary embodiment includes main body 20 and handle 30 (that is, an example of a driven body) that is detachably attached to a front end of main body 20. In the present exemplary embodiment, main body 20 has a shape elongated in the X direction (that is, the front-rear direction, the first direction, or the axial direction of the output shaft). Main body 20 includes main body housing 21 forming an outline of main body 20, and grip part 211 (that is, an example of a grip) that can be gripped by a hand is formed on main body housing 21. Such a main body housing 21 can be formed, for example, by joining a plurality of split bodies by using a material such as a synthetic resin. Note that, the plurality of split bodies may be joined together by using a screw or fitting the split bodies to each other, for example. In addition, operation switch 24 is attached to main body housing 21 so as to be pushable inward in a state of being exposed to the outside thereof.

Further, in the present exemplary embodiment, a cavity is formed inside main body housing 21 formed by joining a plurality of split bodies, and various electric components such as vibratory linear actuator 40 are accommodated in the cavity.

In the present exemplary embodiment, (i) vibratory linear actuator 40 excluding a distal end portion (more specifically, a front end portion) of output shaft 616, (ii) battery 23 that drives vibratory linear actuator 40, and (iii) circuit board 22 that controls power supply to vibratory linear actuator 40 in accordance with a pressing operation of operation switch 24 exposed to the outside are accommodated in the cavity formed inside main body housing 21. Note that, examples of battery 23 accommodated in the cavity formed inside main body housing 21 include a dry battery and a rechargeable battery (for example, a rechargeable battery having a dry battery shape) which has an identical shape as the dry battery and is compatible with the dry battery. In addition, controller 221 that controls a voltage applied to electromagnet 52, which will be described later, in vibratory linear actuator 40 is formed on circuit board 22.

On the other hand, handle 30 (that is, an example of the driven body) includes handle main body 31 elongated in the X direction (that is, the front-rear direction, the first direction, or the axial direction of the output shaft) and brush 32 connected to a front end of handle main body 31. In the present exemplary embodiment, vibratory linear actuator 40 is accommodated in main body housing 21 in a state where connected part 6161 formed on output shaft 616 is exposed to an outside of main body housing 21. Handle main body 31 is detachably coupled to output shaft 616 by releasably connecting connecting part 311 formed at a rear end portion of handle main body 31 to connected part 6161 exposed to the outside of main body housing 21.

In addition, a plurality of bristles 321 (that is, a brush bundle) are provided on an upper surface of brush 32 to protrude upward, and brush 32 on which the plurality of bristles 321 (that is, the brush bundle) are provided can be introduced into an oral cavity of a user or the like.

In addition, in the present exemplary embodiment, when vibratory linear actuator 40 is driven, output shaft 616 reciprocates in the X direction (that is, the front-rear direction, the first direction, or the axial direction of the output shaft). Thus, when vibratory linear actuator 40 is driven in a state where handle 30 (that is, an example of the driven body) is coupled to output shaft 616, handle 30 (that is, an example of the driven body) also reciprocates in the X direction (that is, the front-rear direction, the first direction, or the axial direction of the output shaft) in conjunction with the reciprocation of output shaft 616. That is, bristles 321 (that is, the brush bundle) provided on brush 32 reciprocate (that is, an example of vibration) in the X direction (that is, the front-rear direction, the first direction, or the axial direction of the output shaft).

In a state where bristles 321 (that is, the brush bundle) are vibrated in the X direction (that is, the front-rear direction, the first direction, or the axial direction of the output shaft), the user grips grip part 211 (that is, an example of the grip) with his or her hand, and puts bristles 321 (that is, the brush bundle) in the oral cavity to brush his or her teeth. As a result, food debris and dental plaque can be removed.

As described above, electric toothbrush 10 (that is, an example of the oral hygiene device) according to the present exemplary embodiment is a device for cleaning the oral cavity (for example, teeth, gums, and the like) of the user with bristles 321 (that is, the brush bundle) vibrated in the X direction (that is, the front-rear direction, the first direction, or the axial direction of the output shaft).

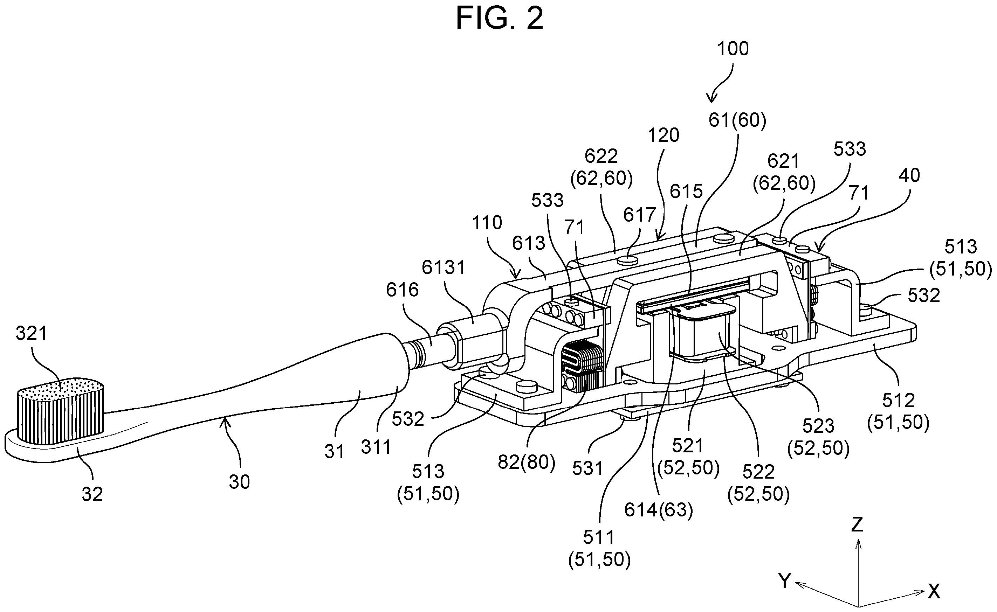

Note that, handle 30 (that is, an example of the driven body) is configured to reciprocate in the X direction (that is, the front-rear direction, the first direction, or the axial direction of the output shaft) relatively with respect to main body 20. Accordingly, electric toothbrush 10 (that is, an example of the oral hygiene device) according to the present exemplary embodiment is formed by accommodating, in main body 20, a part of vibratory linear actuator structure 100 formed by coupling handle 30 (that is, an example of the driven body) to vibratory linear actuator 40 such that handle 30 (that is, an example of the driven body) can reciprocate relatively with respect to main body 20 in the X direction (that is, the front-rear direction, the first direction, or the axial direction of the output shaft). Fig. 2 is a perspective view illustrating an example of vibratory linear actuator structure 100 according to the exemplary embodiment. Electric toothbrush 10 (that is, an example of the oral hygiene device) according to the present exemplary embodiment includes vibratory linear actuator structure 100 illustrated in Fig. 2.

Next, a specific configuration of vibratory linear actuator 40 constituting a part of vibratory linear actuator structure 100 will be described.

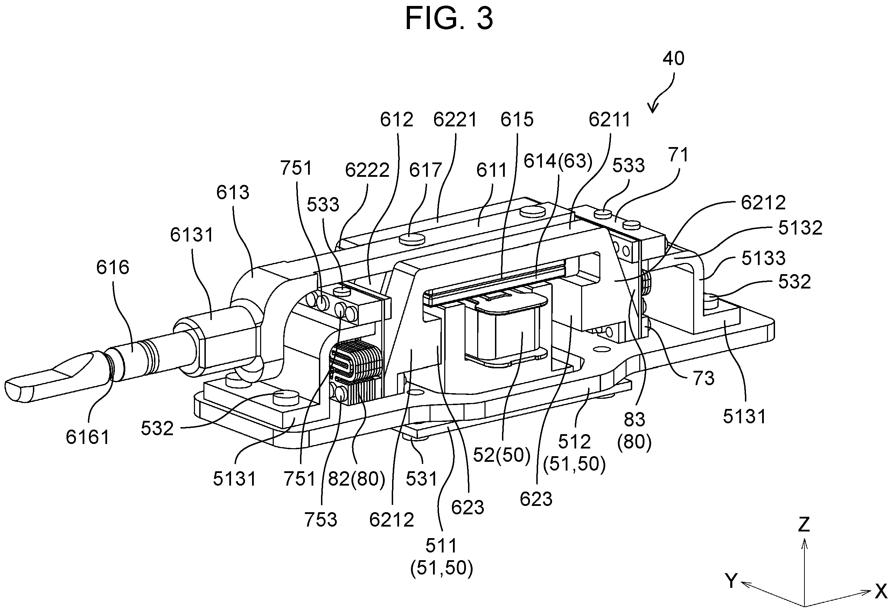

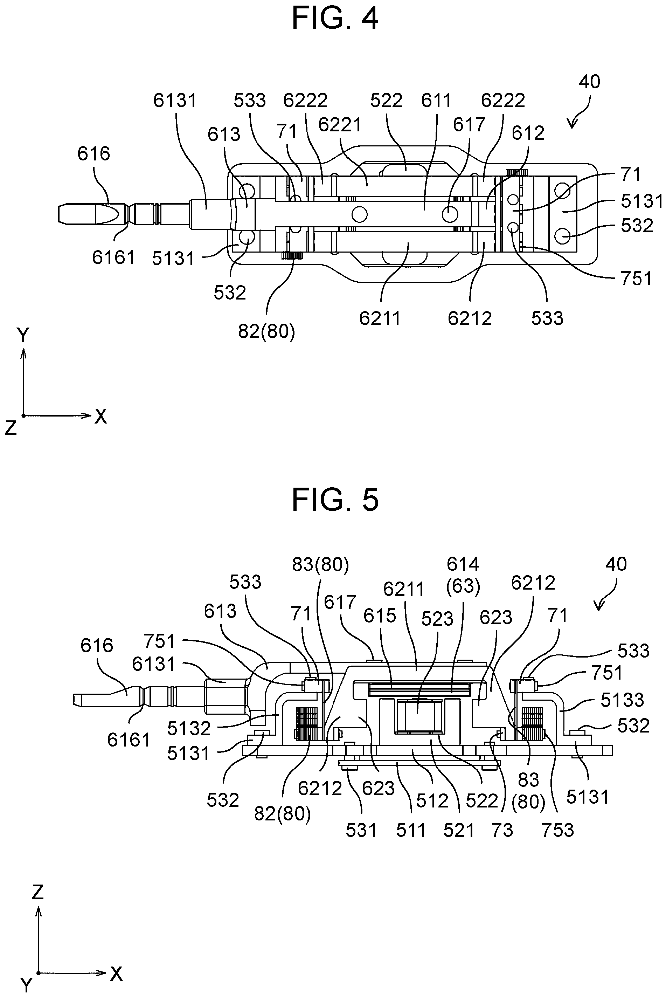

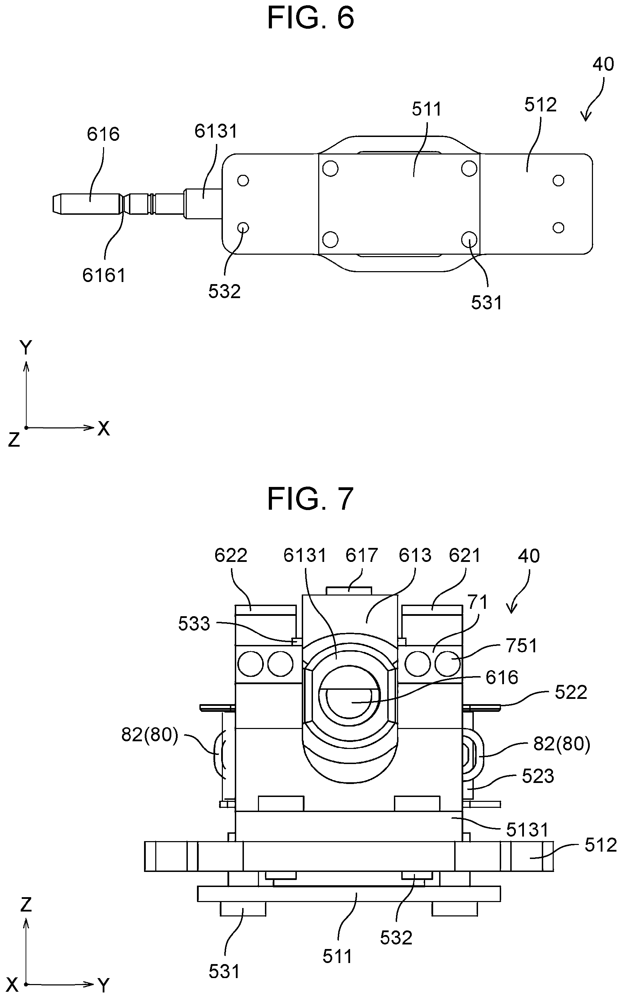

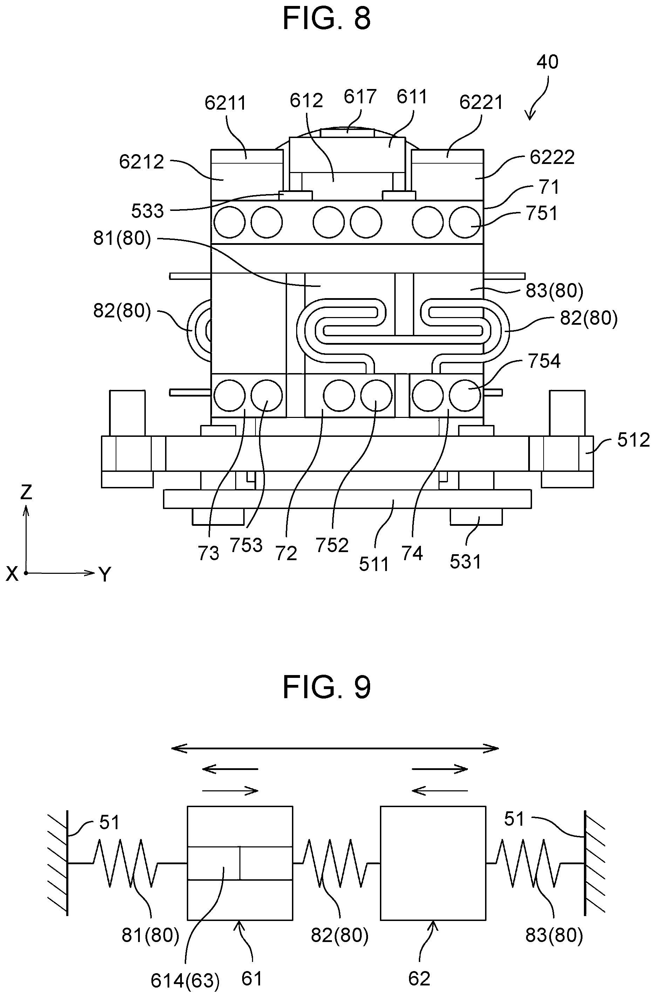

Fig. 3 is a perspective view illustrating an example of vibratory linear actuator 40 according to the exemplary embodiment. Fig. 4 is a plan view illustrating an example of vibratory linear actuator 40 according to the exemplary embodiment. Fig. 5 is a side view illustrating an example of vibratory linear actuator 40 according to the exemplary embodiment. Fig. 6 is a rear view illustrating an example of vibratory linear actuator 40 according to the exemplary embodiment. Fig. 7 is a front view illustrating an example of vibratory linear actuator 40 according to the exemplary embodiment. Fig. 8 is a back view illustrating an example of vibratory linear actuator 40 according to the exemplary embodiment. As illustrated in Figs. 3 to 8, vibratory linear actuator 40 includes electromagnetic block 50 having electromagnet 52. In addition, vibratory linear actuator 40 includes magnetic block 60. Magnetic block 60 includes permanent magnet 63 disposed so as to face electromagnet 52 with a gap is formed between permanent magnet 63 and electromagnet 52. Magnetic block 60 is configured to be reciprocated in the X direction (that is, the front-rear direction, the first direction, or the axial direction of the output shaft) relatively with respect to electromagnetic block 50 by a periodically fluctuating magnetic field.

As illustrated in Figs. 3 and 5, electromagnetic block 50 includes electromagnet 52 capable of generating the periodically fluctuating magnetic field and fixing part 51 capable of fixing vibratory linear actuator 40 to main body housing 21 in a state of holding electromagnet 52 and allowing output shaft 616 to reciprocate.

In the present exemplary embodiment, fixing part 51 includes first fixing plate 511 that fixes and holds electromagnet 52 and second fixing plate 512 to which first fixing plate 511 is fixed. Second fixing plate 512 is fixed to a fixed part (not illustrated) formed inside main body housing 21, and thus, vibratory linear actuator 40 is fixed to main body housing 21 in a state where the reciprocation of output shaft 616 is allowed. Note that, in the present exemplary embodiment, first fixing plate 511 and second fixing plate 512 are fixed by fastening component 531 such as a rivet.

Further, in the present exemplary embodiment, fixing part 51 includes a pair of coupling plates 513 fixed to both end portions of second fixing plate 512 in the X direction (that is, the front-rear direction, the first direction, or the axial direction of the output shaft). Coupling spring 80 for coupling magnetic block 60 is coupled to each of the pair of coupling plates 513 in a state of being capable of flexurally deforming (that is, an example of elastic deformation) in the X direction (that is, the front-rear direction, the first direction, or the axial direction of the output shaft).

Specifically, each of the pair of coupling plates 513 includes lower fixing part 5131 fixed to second fixing plate 512, upper fixing part 5132 to which an upper end of coupling spring 80 (more specifically, first spring 81 and third spring 83, which will be described later) is fixed, and coupling part 5133 that couples lower fixing part 5131 to upper fixing part 5132.

Further, in the present exemplary embodiment, upper spring fixing part 71 is fixed to upper fixing part 5132 by fastening component 533 such as a rivet. Upper ends of first spring 81 and third spring 83 are fixed to upper spring fixing part 71 by fastening component 751 such as a rivet.

As described above, in the present exemplary embodiment, one end (more specifically, the upper end) of each of first spring 81 and third spring 83 is fixed to coupling plate 513 with upper spring fixing part 71, and the other end (more specifically, a lower end) is fixed to magnetic block 60. In this way, magnetic block 60 is fixed to coupling plate 513 with first spring 81 and third spring 83 (that is, elements of coupling spring 80), and magnetic block 60 can reciprocate in the X direction (that is, the front-rear direction, the first direction, or the axial direction of the output shaft) relatively with respect to electromagnetic block 50. Note that, in the present exemplary embodiment, second fixing plate 512 and coupling plate 513 are fixed by fastening component 532 such as a rivet.

On the other hand, electromagnet 52 includes core 521 in which a main magnetic path of a magnetic flux is generated when electromagnet 52 is driven is formed, coil bobbin 522 that is held by core 521, and coil 523 wound around coil bobbin 522.

Core 521 may be made of a soft magnetic material (that is, a soft magnetic body), for example, having little capacity of retaining a magnetic force but having a high magnetic permeability. In the present exemplary embodiment, core 521 is formed of electromagnetic steel sheets through which a large number of lines of magnetic force are passed.

Coil bobbin 522 can be made of, for example, a material having electrical insulation properties such as synthetic resin, and coil 523 made of a conductive material is wound around the outer surface thereof. When an AC current is supplied to coil 523 in a state where coil 523 is wound around the outer surface of coil bobbin 522, a magnetic flux (that is, a magnetic circuit) passing through core 521 is generated, and a magnetic pole surface in which an N pole and an S pole are periodically exchanged is formed on an upper end surface of core 521.

As illustrated in Figs. 3 to 5, magnetic block 60 includes first movable body 61 and second movable body 62, and each of first movable body 61 and second movable body 62 is fixed to coupling plate 513 with coupling spring 80.

Specifically, coupling spring 80 includes first spring 81, second spring 82, and third spring 83. First movable body 61 is fixed to coupling plate 513 with first spring 81. In addition, second movable body 62 is fixed to coupling plate 513 with third spring 83. Further, in the present exemplary embodiment, first movable body 61 and second movable body 62 are coupled by second spring 82.

As described above, in the present exemplary embodiment, magnetic block 60 includes first movable body 61 which is coupled to electromagnetic block 50 with a first spring 81 and second movable body 62 which is coupled to first movable body 61 with second spring 82 and coupled to electromagnetic block 50 with third spring 83.

Here, in the present exemplary embodiment, first movable body 61 includes facing wall 611 and a pair of fixing walls 612. Facing wall 611 has a substantially rectangular plate shape elongated in the X direction (that is, the front-rear direction, the first direction, or the axial direction of the output shaft). Facing wall 611 is disposed above electromagnet 52 to face electromagnet 52 with a gap in such a way that a gap is formed between facing wall 611 and electromagnet 52. Fixing walls 612 are connected from both sides of facing wall 611 in the X direction (that is, the front-rear direction, the first direction, or the axial direction of the output shaft) to extend downward and away from electromagnet 52. Permanent magnet 614 is fixed to a lower surface of facing wall 611 with back yoke 615. In the present exemplary embodiment, back yoke 615 and permanent magnet 614 are fixed to the lower surface of facing wall 611 by fastening component 617 such as a rivet. Note that, back yoke 615 and permanent magnet 614 may be bonded to the lower surface of facing wall 611. In this way, permanent magnet 614 as permanent magnet 63 of magnetic block 60 faces electromagnet 52 vertically with the gap. In addition, lower ends of first springs 81 are coupled to lower ends of the pair of fixing walls 612.

Further, in the present exemplary embodiment, first movable body 61 includes extending wall 613 connected so as to protrude forward of front-side coupling plate 513 from a front end of facing wall 611. Extending wall 613 has a shape in which the front end portion thereof is bent downward, and output shaft fixing part 6131 is formed at a portion of the front end portion of extending wall 613, the portion having been bent downward, such as output shaft fixing part 6131 protrudes forward. Output shaft 616 is fixed to output shaft fixing part 6131.

On the other hand, second movable body 62 includes one side weight 621 disposed on one side of first movable body 61 in the Y direction (that is, in the width direction or the third direction), other side weight 622 disposed on the other side of first movable body 61 in the Y direction (that is, in the width direction or the third direction), and coupling wall 623 that couples one side weight 621 to other side weight 622.

One side weight 621 includes facing wall 6211. Facing wall 6211 has a substantially rectangular plate shape elongated in the X direction (that is, the front-rear direction, the first direction, or the axial direction of the output shaft), Facing wall 6211 is disposed above electromagnet 52 to face facing wall 611 in such a way a gap is formed between facing wall 6211 and face facing wall 611 in the Y direction (that is, in the width direction or the third direction). Facing wall 6211 faces electromagnet 52 in such a way that a gap is formed therebetween. In addition, one side weight 621 includes a pair of fixing walls 6212 connected from both sides of facing wall 6211 in the X direction (that is, the front-rear direction, the first direction, or the axial direction of the output shaft) so as to extend downward and away from electromagnet 52.

Similarly, other side weight 622 includes facing wall 6221. Facing wall 6221 has a substantially rectangular plate shape elongated in the X direction (that is, the front-rear direction, the first direction, or the axial direction of the output shaft). Facing wall 6221 is disposed above electromagnet 52 so as to be adjacent to facing wall 611 in such a way that a gap is formed between facing wall 6221 and facing wall 611 in the Y direction (that is, in the width direction or the third direction). The back surface of facing wall 6221 faces electromagnet 52 in such a way that a gap is formed therebetween. In addition, other side weight 622 includes a pair of fixing walls 6222 connected from both sides of facing wall 6221 in the X direction (that is, the front-rear direction, the first direction, or the axial direction of the output shaft) so as to extend downward and away from electromagnet 52.

Fixing wall 6212 positioned on a front side of one side weight 621 and fixing wall 6222 positioned on a front side of other side weight 622 are coupled by coupling wall 623. In addition, fixing wall 6212 positioned on a rear side of one side weight 621 and fixing wall 6222 positioned on a rear side of other side weight 622 are coupled by coupling wall 623.

Further, a lower end of third spring 83 is coupled to a lower end of fixing wall 6212, and the lower end of third spring 83 is coupled to a lower end of fixing wall 6222. In addition, fixing wall 612 positioned on a front side of first movable body 61 and fixing wall 6212 positioned on a front side of one side weight 621 are fixed by second spring 82. Fixing wall 612 positioned on a rear side of first movable body 61 and fixing wall 6212 positioned on a rear side of the other side weight 622 are fixed by second spring 82.

In the present exemplary embodiment, the lower end of first spring 81 and one end of second spring 82 are fixed to the lower end of fixing wall 612 by fastening component 752 such as a rivet by using first lower spring fixing part 72, and thus, the lower end of first spring 81 and one end of second spring 82 are fixed to the lower end of fixing wall 612.

In addition, the lower end of third spring 83 positioned on one side in the Y direction (that is, in the width direction or the third direction) is fixed to the lower end of fixing wall 6212 of one side weight 621 by fastening component 753 such as a rivet by using second lower spring fixing part 73, and thus, the lower end of third spring 83 is fixed to the lower end of fixing wall 6212. At this time, the other end of second spring 82 is fixed together with the lower end of third spring 83 to the lower end of fixing wall 6212 positioned on the front side of one side weight 621.

The lower end of third spring 83 positioned on the other side in the Y direction (that is, in the width direction or the third direction) is fixed to the lower end of fixing wall 6222 of other side weight 622 by fastening component 754 such as a rivet by using the third lower spring fixing part 74, and thus, the lower end of third spring 83 is fixed to the lower end of fixing wall 6222. At this time, the other end of second spring 82 is fixed together with the lower end of third spring 83 to the lower end of fixing wall 6222 positioned on the rear side of other side weight 622.

Note that, in the present exemplary embodiment, first spring 81 and third spring 83 are leaf springs disposed such that the surfaces thereof substantially correspond to a YZ plane. In addition, as second spring 82, a plurality of spring pieces each having a torsion portion are stacked in the X direction (that is, the front-rear direction, the first direction, or the axial direction of the output shaft).

As described above, in the present exemplary embodiment, electromagnetic block 50 includes only one electromagnet 52. In addition, magnetic block 60 includes two movable bodies (that is, first movable body 61 and second movable body 62) capable of reciprocating in the X direction (that is, the front-rear direction, the first direction, or the axial direction of the output shaft) independently of each other.

One electromagnet 52 is driven, and thus, two movable bodies (that is, first movable body 61 and second movable body 62) can reciprocate in the X direction (that is, the front-rear direction, the first direction, or the axial direction of the output shaft) in phases opposite to each other. As described above, first movable body 61 and second movable body 62 reciprocate by using one electromagnet 52, and thus, it is possible to miniaturize vibratory linear actuator 40 in which first movable body 61 and second movable body 62 are configured to reciprocate.

In addition, in the present exemplary embodiment, output shaft 616 to which handle 30 (that is, an example of the driven body) is attached is formed only in one movable body (that is, first movable body 61) out of two movable bodies (that is, first movable body 61 and second movable body 62). First movable body 61 in which output shaft 616 is formed is positioned at a center in the Y direction (that is, in the width direction or the third direction).

In this way, vibration generated when two movable bodies (first movable body 61 and second movable body 62) reciprocate in the X direction (that is, the front-rear direction, the first direction, or the axial direction of the output shaft) is suppressed.

Vibratory linear actuator 40 having such a configuration is particularly suitable for use in a device that cause one driven body (for example, handle 30) to reciprocate in the axial direction, such as electric toothbrush 10 (that is, an example of the oral hygiene device).

First movable body 61 to which handle 30 (that is, an example of the driven body) is attached and second movable body 62 coupled to first movable body 61 with second spring 82 can be reciprocated in the X direction (that is, the front-rear direction, the first direction, or the axial direction of the output shaft) in phases opposite to each other by a periodically fluctuating magnetic field generated when electromagnet 52 is driven.

That is, first movable block 110 including handle 30 (that is, an example of the driven body) attached to output shaft 616 of first movable body 61 and a member that reciprocates together with first movable body 61 and second movable block 120 including a member that reciprocates together with second movable body 62 can reciprocate in the X direction (that is, the front-rear direction, the first direction, or the axial direction of the output shaft) in phases opposite to each other.

It is preferable that two movable bodies (that is, first movable body 61 and second movable body 62) not only perform single vibration in the phases opposite to each other but also can reciprocate with more complicated movement.

In the present exemplary embodiment, first movable body 61 and second movable body 62 can perform not only single vibration in the phases opposite to each other but also single vibration in the same phases as each other.

Specifically, at least one of first movable body 61 or second movable body 62 is provided with permanent magnet 63 such that a magnetic force of first movable body 61 is different from a magnetic force of second movable body 62. The magnetic force of each movable body can be obtained, for example, by measuring a magnetic flux density of permanent magnet 63 by using a Gaussian meter.

In this way, when vibratory linear actuator 40 is driven, a thrust acting on first movable body 61 and a thrust acting on second movable body 62 are set to be different from each other.

Note that, the thrust acting on first movable body 61 and the thrust acting on second movable body 62 can be set to be different from each other by the following method.

For example, it is possible to set the thrust acting on first movable body 61 and the thrust acting on second movable body 62 to be different from each other by providing each of first movable body 61 and second movable body 62 with identical permanent magnet 63 and by setting a shape of a stator (for example, fixing part 51 of electromagnetic block 50) to be different between a part facing first movable body 61 and a part facing second movable body 62.

In addition, it is possible to set the thrust acting on first movable body 61 and the thrust acting on second movable body to be different from each other by providing each of first movable body 61 and second movable body 62 with identical permanent magnet 63, by setting the shape of the stator (for example, fixing part 51 of electromagnetic block 50) on the part facing first movable body 61 and the shape of the stator (for example, fixing part 51 of electromagnetic block 50) on the part facing second movable body 62 to be the same as each other, and by setting a gap length between first movable body 61 and the stator (for example, fixing part 51 of electromagnetic block 50) and a gap length between second movable body 62 and the stator to be different from each other.

In addition, it is also possible to set the thrust acting on first movable body 61 and the thrust acting on second movable body 62 to be different from each other by providing one of first movable body 61 and second movable body 62 with permanent magnet 63 so as to protrude from the stator (for example, fixing part 51 of electromagnetic block 50).

In addition, a conductor may be disposed between one of first movable body 61 and second movable body 62 and the stator (for example, fixing part 51 of electromagnetic block 50) or may be disposed on a side surface of the one movable body. This also makes it possible to set the thrust acting on first movable body 61 and the thrust acting on second movable body 62 to be different from each other by using a brake generated due to an eddy current.

The thrust acting on each movable body can be obtained, for example, by measuring the thrust when a current flows through coil 523 by using a load cell.

Here, in the present exemplary embodiment, only first movable body 61 out of first movable body 61 and second movable body 62 is provided with permanent magnet 614 as permanent magnet 63, and second movable body 62 is not provided with permanent magnet 63. In this way, the magnetic force of first movable body 61 and the magnetic force of second movable body 62 are different from each other. As described above, in the present exemplary embodiment, the magnetic force of second movable body 62, which is smaller than that of first movable body 61, is set to be 0 (more specifically, less than or equal to 50% of the magnetic force of first movable body 61, which is the larger magnetic force).

Accordingly, vibratory linear actuator 40 according to the present exemplary embodiment includes first movable body 61 and second movable body 62 approximated by a vibration model illustrated in Fig. 9.

That is, vibratory linear actuator 40 according to the present exemplary embodiment has a structure in which first movable body 61 including permanent magnet 63 and fixed to the stator (for example, fixing part 51 of electromagnetic block 50) by first spring 81 and second movable body 62 not including permanent magnet 63 and fixed to the stator (for example, fixing part 51 of electromagnetic block 50) by third spring 83 are coupled by second spring 82.

Fig. 9 is a diagram schematically illustrating a vibration model of an example of vibratory linear actuator 40 according to the exemplary embodiment. Electromagnet 52 is driven to vibrate first movable body 61 and second movable body 62 approximated by the vibration model illustrated in Fig. 9.

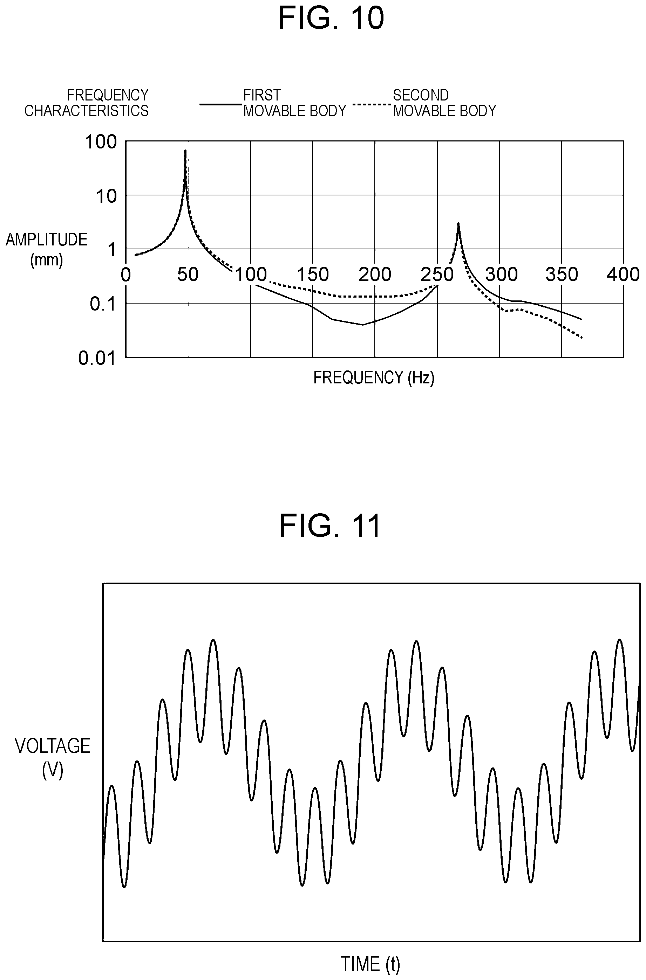

Fig. 10 is a diagram illustrating frequency characteristics of first movable body 61 and second movable body 62 according to the exemplary embodiment. Incidentally, as in the vibration model illustrated in Fig. 9, when the magnetic force of first movable body 61 and the magnetic force of second movable body 62 are set to be different from each other, it is known that two movable bodies (that is, first movable body 61 and second movable body 62) have frequency characteristics illustrated in Fig. 10. That is, it is known that a frequency at which an amplitude increases in the same phase (that is, the amplitude resonates in the same phase) and a frequency at which the amplitude increases in an opposite phase (that is, the amplitude resonates in the opposite phase) are present. Note that, when a difference between the magnetic force of first movable body 61 and the magnetic force of second movable body 62 increases, the amplitude at the frequency at which the amplitude increases in the same phase also increases.

In the present exemplary embodiment, first movable body 61 and second movable body 62 are vibrated by using two resonance frequencies (that is, the frequency at which the amplitude increases in the same phase and the frequency at which the amplitude increases in the opposite phase).

Specifically, when electromagnet 52 is driven, voltage V having a waveform in which two different waveforms have been superimposed is applied to electromagnet 52. Fig. 11 is a diagram illustrating the waveform of the voltage applied to electromagnet 52 according to the exemplary embodiment. In the present exemplary embodiment, voltage V having the waveform illustrated in Fig. 11 is applied to electromagnet 52.

Note that, voltage V illustrated in Fig. 11 is V = sin(ω₁t) + sin(ω₂t). Accordingly, in the present exemplary embodiment, when electromagnet 52 is driven, voltage V of a synthesized wave obtained by synthesizing waveforms of two different frequencies (for example, a wave obtained by synthesizing two sinusoidal waves having different frequencies) is applied to electromagnet 52. Here, ω₁ is a frequency at which the amplitude increases in the same phase, and ω₁ is preferably set in a range of 20 Hz to 60 Hz based on the frequency characteristics illustrated in Fig. 10. In this way, the amplitude in the same phase can be more than or equal to 1.0 mm. At this time, when ω₁ is set to be 48 Hz, the amplitude in the same phase can be set to be a maximum amplitude. In addition, ω₂ is a frequency at which the amplitude increases in the opposite phase, and ω₂ is preferably set in a range of 250 Hz to 280 Hz based on the frequency characteristics illustrated in Fig. 10. In this way, the amplitude at the opposite phase can be more than or equal to 0.2 mm. At this time, when ω₂ is set to be 270 Hz, the amplitude at the opposite phase can be set to be the maximum amplitude.

As described above, first movable body 61 and second movable body 62 approximated by the vibration model illustrated in Fig. 9 are vibrated by electromagnet 52 to which voltage V illustrated in Fig. 11 is applied, and thus, while first movable body 61 and second movable body 62 reciprocate at the frequency at which the amplitude increases in the opposite phase, first movable body 61 and second movable body 62 reciprocate at a frequency at which the amplitude increases in the same phase.

Specifically, while first movable body 61 and second movable body 62 perform a fine reciprocation of a short period in the opposite phases to each other, first movable body 61 and second movable body 62 perform a relatively large reciprocation of a long period in the same phases as each other, the long period being longer than the short period of the fine reciprocation. That is, first movable body 61 and second movable body 62 reciprocate with more complicated movement by not only performing the single vibration in the opposite phase but also performing the single vibration in the same phase at the long period, the long period being longer than that of the single vibration in the opposite phase.

Further, in the present exemplary embodiment, weights of first movable body 61 and the second movable body 62 are set such that weight m1 of first movable block 110 including handle 30 (that is, an example of the driven body) connected to first movable body 61 and reciprocating together with first movable body 61 is substantially the same as weight m2 of second movable block 120 reciprocating together with second movable body 62. Here, first movable block 110 means a single member that reciprocates together with first movable body 61, and in the present exemplary embodiment, at least first movable body 61 and handle 30 (that is, an example of the driven body) connected to the first movable body are included in first movable block 110. In addition, second movable block 120 means a single member that reciprocates together with second movable body 62, and at least second movable body 62 is included in second movable block 120.

As described above, in the present exemplary embodiment, the weights of first movable body 61 and second movable body 62 are set such that weight m1 of first movable block 110 including at least first movable body 61 and handle 30 (that is, an example of the driven body) and reciprocating together with first movable body 61 is substantially the same as to weight m2 of second movable block 120 including at least second movable body 62 and reciprocating together with second movable body 62. That is, in the case of electric toothbrush 10 (that is, an example of the oral hygiene device), the single member reciprocating together with first movable body 61 and the single member reciprocating together with second movable body 62 have the same weights as each other. Accordingly, in the present exemplary embodiment, the weight of first movable body 61 is lighter than the weight of second movable body 62.

As one example of setting the weight of first movable body 61 to be lighter than the weight of second movable body 62, at least a part of first movable body 61 is formed by using resin having a relatively small specific gravity, whereas at least a part of second movable body 62 is formed by using brass having a relatively large specific gravity.

When weight m1 of first movable block 110 and weight m2 of second movable block 120 are substantially the same as to each other, it is possible to more reliably suppress the vibration generated when handle 30 (that is, an example of the driven body) is driven (for example, reciprocated).

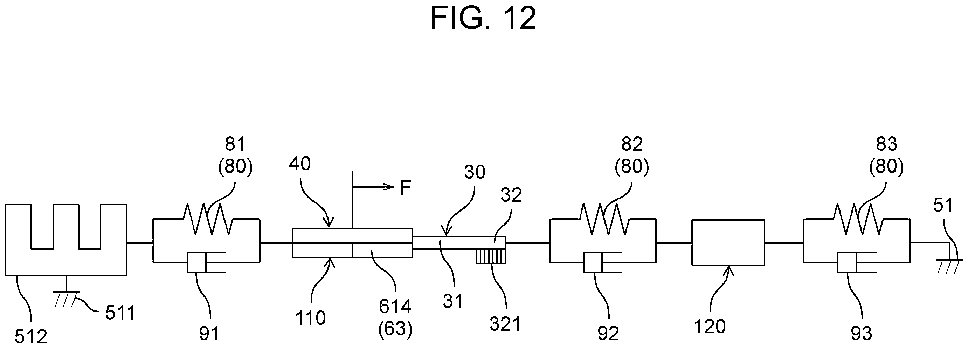

Movements of first movable block 110 and second movable block 120 in a case where vibratory linear actuator structure 100 according to the present exemplary embodiment is used and where the above-mentioned voltage V is applied to electromagnet 52 can be approximated by a forced vibration model in which external force F is present in a mass-spring-damper system illustrated in Fig. 12.

Fig. 12 is a diagram schematically illustrating a vibration model of an example of vibratory linear actuator structure 100 according to the exemplary embodiment. The vibration model of the mass-spring-damper system illustrated in Fig. 12 has a structure in which first movable block 110 fixed to the stator (for example, fixing part 51 of electromagnetic block 50) by first spring 81 having spring constant k1 and first damper 91 having damping coefficient c1 and second movable block 120 fixed to the stator (for example, fixing part 51 of electromagnetic block 50) by third spring 83 having spring constant k3 and third damper 93 having damping coefficient c3 are coupled by second spring 82 having spring constant k2 and second damper 92 having damping coefficient c2. With such a structure, first movable block 110 and second movable block 120 are vibrated by applying external force F to first movable block 110. Note that, external force F applied to first movable block 110 is a force having a constant multiplication of sin(ω₁t) + sin(ω₂t).

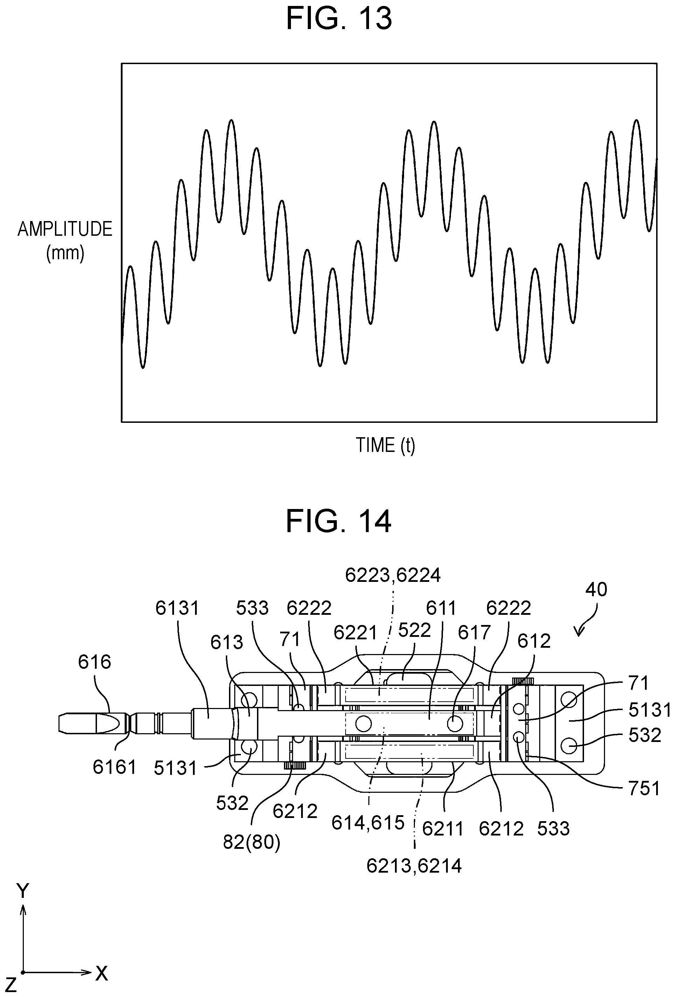

The movements of first movable block 110 and second movable block 120 in a case where vibratory linear actuator structure 100 according to the present exemplary embodiment is used and where the above-mentioned voltage V is applied to electromagnet 52 are substantially similar to the movements of first movable block 110 and second movable block 120 in the forced vibration model in which external force F is present in the mass-spring-damper system illustrated in Fig. 12. Fig. 13 is a diagram illustrating an output waveform of first movable block 110 according to the exemplary embodiment. Note that, an output waveform of second movable block 120 is also substantially similar to the output waveform in Fig. 13.

Specifically, first movable block 110 moves according to the waveform illustrated in Fig. 13. Second movable block 120 moves such that the fine waveform of the short period depicted in Fig. 13 has a phase opposite to the waveform of first movable block 110. That is, in the fine waveform of the short period, first movable block 110 and second movable block 120 reciprocate in the opposite phase at the frequency at which the amplitude increases, while, in the relatively large waveform of the long period, first movable block 110 and second movable block 120 reciprocate in the same phase at the frequency at which the amplitude increases. In other words, while first movable block 110 and second movable block 120 perform the fine reciprocation of the short period in the opposite phase, the first movable block 110 and second movable block 120 perform a relatively large reciprocation of a long period in the same phase, the long period being is longer than the short period of the fine reciprocation in the opposite phase.

Accordingly, in electric toothbrush 10 (that is, an example of the oral hygiene device) using vibratory linear actuator 40 according to the present exemplary embodiment, while handle 30 (that is, an example of the driven body), that is, brush 32 on which the plurality of bristles 321 (that is, the brush bundle) are provided performs a fine reciprocation of a short period, handle 30 (that is, an example of the driven body), that is, brush 32 performs a relatively large reciprocation of a long period which is longer than the short period of the fine reciprocation. Note that, in the present exemplary embodiment, the amplitude of the reciprocation in the opposite phase, which are the fine reciprocation of the short period, are set to be 0.2 mm to 1.5 mm, and the amplitude of the reciprocations in the same phase, which are the relatively large reciprocation of the long period, are set to be 1.0 mm to 2.0 mm. That is, brush 32 on which the plurality of bristles 321 (that is, the brush bundle) are provided reciprocates with an amplitude of 1.2 mm to 3.5 mm as a whole.

Brush 32 reciprocating with such complicated movement is put in the oral cavity to brush the teeth, and thus, it is possible to more efficiently remove food debris and dental plaque while reducing stimulation generated due to the vibration of brush 32 in the oral cavity.

Note that, vibratory linear actuator 40 may have a configuration illustrated in Fig. 14.

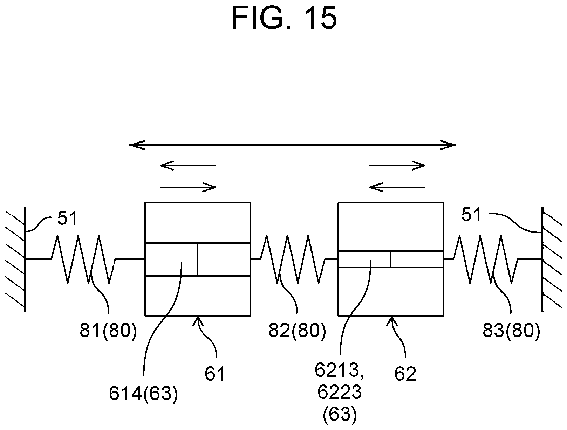

Fig. 14 is a plan view illustrating an example of vibratory linear actuator 40 according to a variation. Fig. 15 is a diagram schematically illustrating a vibration model of an example of vibratory linear actuator 40 according to the variation. In vibratory linear actuator 40 illustrated in Fig. 14, permanent magnet 63 is also provided in at least one of first movable body 61 or second movable body 62 such that the magnetic force of first movable body 61 and the magnetic force of second movable body 62 are different from each other.

In vibratory linear actuator 40 illustrated in Fig. 14, permanent magnets 63 are provided in both first movable body 61 and second movable body 62, and the magnetic force of first movable body 61 and the magnetic force of second movable body 62 are different from each other.

In Fig. 14, permanent magnet 6213 is fixed to a lower surface of facing wall 6211 of one side weight 621 with back yoke 6214. In addition, permanent magnet 6223 is fixed to a lower surface of facing wall 6221 of other side weight 622 with back yoke 6224.

The magnetic force of first movable body 61 and the magnetic force of second movable body 62 are set to be different from each other. In Fig. 14, the magnetic force of second movable body 62, which is smaller than the magnetic force of first movable body 61, is set to be less than or equal to 50% of the magnetic force of first movable body 61, which is the larger magnetic force.

Accordingly, vibratory linear actuator 40 illustrated in Fig. 14 includes first movable body 61 and second movable body 62 approximated by a vibration model illustrated in Fig. 15.

That is, vibratory linear actuator 40 illustrated in Fig. 14 has a structure in which first movable body 61 including permanent magnet 63 having a large magnetic force and fixed to the stator (for example, fixing part 51 of electromagnetic block 50) by first spring 81 and second movable body 62 including permanent magnet 63 having a small magnetic force and fixed to the stator (for example, fixing part 51 of electromagnetic block 50) by third spring 83 are coupled by second spring 82.

Even with such a configuration, it is possible to achieve substantially actions and effects similar to vibratory linear actuator 40 described in the above exemplary embodiment.

### (Appendix)

The above description of the exemplary embodiment discloses technologies below.

(Technology 1) A vibratory linear actuator comprising an electromagnetic block including an electromagnet and a magnetic block including a permanent magnet disposed to face the electromagnet in such a way that a gap is formed between the permanent magnet and the electromagnet. The magnetic block is configured to be reciprocated in a first direction relatively with respect to the electromagnetic block by a periodically fluctuating magnetic field. The magnetic block comprises a first movable body coupled to the electromagnetic block with a first spring, and a second movable body coupled to the first movable body with a second spring. The first movable body and the second movable body are configured such that the first movable body and the second movable body reciprocate at a frequency at which an amplitude increases in an opposite phase while the first movable body and the second movable body reciprocate at a frequency at which an amplitude increases in the same phase, when a voltage having a waveform in which two different waveforms have been superimposed is applied to the electromagnet in a state where a thrust acting on the first movable body and a thrust acting on the second movable body are different from each other.

As described above, the vibratory linear actuator of Technology 1 is a device in which the first movable body and the second movable body are reciprocated in the first direction relatively with respect to the electromagnetic block by generating the periodically fluctuating magnetic field.

In a state where the thrust acting on the first movable body and the thrust acting on the second movable body are different from each other, the voltage having the waveform in which two different waveforms have been superimposed is applied to the electromagnet. In this way, the first movable body and the second movable body reciprocate in a movement obtained by synthesizing a movement at the frequency at which the amplitude increases in the same phase with a movement at the frequency at which the amplitude increases in the opposite phase. In this way, while the first movable body and the second movable body perform the fine reciprocation of the short period in the opposite phase, the first movable body and the second movable body perform a relatively large reciprocation of a long period in the same phase, the long period being longer than that of the fine reciprocation. That is, the first movable body and the second movable body perform not only single vibration in the opposite phase but also single vibration in the same phase at a period, the period being longer than that of the single vibration in opposite phase.

As described above, with the vibratory linear actuator of Technology 1, the first movable body and the second movable body can reciprocate with more complicated movement.

(Technology 2) In the vibratory linear actuator according to Technology 1, at least one of the first movable body or the second movable body is provided with the permanent magnet, and the thrust acting on the first movable body and the thrust acting on the second movable body are set to be different from each other by setting a magnetic force of the first movable body and a magnetic force of the second movable body to be different from each other.

In the Technology 2, it is possible to simplify the shapes of the first movable body and the second movable body, and to set the thrust acting on the first movable body and the thrust acting on the second movable body to be different from each other.

(Technology 3) In the vibratory linear actuator according to Technology 2, either the first movable body or the second movable body is provided with the permanent magnet.

In the Technology 3, the smaller magnetic force selected from the group consisting of the magnetic forces of the first movable body and the second movable body can be set to be zero more easily and reliably.

(Technology 4) In the vibratory linear actuator according to any one of Technology 1 to Technology 3, a weight of the first movable body is different from a weight of the second movable body.

In the Technology 4, when the driven body is connected to the first movable body or the second movable body, the weight of the first movable body and the weight of the second movable body can be set to be substantially the same as each other. As described above, when the weight of the first movable body and the weight of the second movable body when the driven body is connected are set to be substantially the same as each other, vibration generated when the driven body is driven (for example, is reciprocated) can be more reliably suppressed.

(Technology 5) In the vibratory linear actuator according to any one of Technology 1 to Technology 4, the electromagnet block included in the electromagnetic is composed of one electromagnet.

In the Technology 5, since the first movable body and the second movable body reciprocate by using the one electromagnet, it is possible to miniaturize the vibratory linear actuator in which the first movable body and the second movable body can reciprocate with more complicated movement.

(Technology 6) In the vibratory linear actuator according to any one of Technology 1 to Technology 5, the second movable body is coupled to the electromagnetic block with a third spring.

In the Technology 6, since it is possible to more stably hold the first movable body and the second movable body in the electromagnetic block, when the first movable body and the second movable body reciprocate in the first direction, it is possible to more reliably prevent the first movable body and the second movable body from shaking in a direction intersecting the first direction.

(Technology 7) An electric toothbrush includes the vibratory linear actuator according to any one of Technology 1 to Technology 6, and a handle including a brush and connected to the first movable body or the second movable body.

In the Technology 7, it is possible to obtain an electric toothbrush in which the brush of the handle can reciprocate with more complicated movement. By using such an electric toothbrush, it is possible to more efficiently remove food debris and dental plaque while reducing stimulation due to vibration of the brush in the oral cavity.

(Technology 8) In the electric toothbrush according to Technology 7, in a case where the handle is connected to the first movable body, weights of the first movable body and the second movable body are set in such a way that a weight of a first movable block including at least the first movable body and the handle and reciprocating together with the first movable body is substantially the same as a weight of a second movable block including at least the second movable body and reciprocating together with the second movable body, and in a case where the handle is connected to the second movable body, the weights of the first movable body and the second movable body are set in such a way that the weight of the first movable block including at least the first movable body and reciprocating together with the first movable body is substantially the same as the weight of the second movable block including at least the second movable body and the handle and reciprocating together with the second movable body.

In the Technology 8, the vibration generated when the handle of the electric toothbrush formed by using the vibratory linear actuator is driven (for example, is reciprocated) can be more reliably suppressed.

### [Others]

Although the vibratory linear actuator and the electric toothbrush according to the present disclosure have been described in detail above, these descriptions are not intended to limit the scope of the present disclosure, and it is clear to those skilled in the art that various variations and improvements thereof are still possible.

For example, in the above exemplary embodiment and the variation thereof, the vibratory linear actuator usable for the electric toothbrush (that is, an example of the oral hygiene device) as the personal care product has been exemplified, but the vibratory linear actuator can also be used for a product other than the electric toothbrush (that is, an example of the oral hygiene device). For example, it can be used in other personal care products such as shavers (that is, an electric razor) and hair clippers (that is, an example of hair cutting device).

In addition, the present disclosure can be applied to exemplary embodiments in which changes, replacements, additions, omissions, and the like of the configurations described in the above exemplary embodiment and the variation thereof are made. In addition, it is also possible to set a new exemplary embodiment by combining constituent elements described in the above exemplary embodiment and the variation thereof.

In addition, in the above exemplary embodiment and the variation thereof, weight m1 of first movable block 110 and weight m2 of second movable block 120 are substantially the same as each other. However, weight m1 of first movable block 110 and weight m2 of second movable block 120 may be different from each other.

In addition, the weight of first movable body 61 and the weight of second movable body 62 can be set to be substantially the same as each other.

In addition, in the above exemplary embodiment and the variation thereof, vibratory linear actuator 40 including third spring 83 has been exemplified, but vibratory linear actuator 40 not including third spring 83 may be used. For example, second movable body 62 is coupled to first movable body 61 with second spring 82, but second movable body 62 does not be coupled to electromagnetic block 50. That is, second movable body 62 may be coupled only to first movable body 61 out of electromagnetic block 50 and first movable body 61.

In addition, although vibratory linear actuator 40 in which handle 30 (that is, an example of the driven body) is connected to first movable body 61 has been exemplified, it is also possible to use a vibratory linear actuator in which handle 30 (that is, an example of the driven body) is connected to second movable body 62. In this case, the weights of first movable body 61 and second movable body 62 are preferably set such that the weight of first movable block 110 including at least first movable body 61 and reciprocating together with first movable body 61 is substantially the same as the weight of second movable block 120 including at least second movable body 62 and handle 30 (that is, an example of the driven body) and reciprocating together with second movable body 62.

In the above exemplary embodiment and the variation thereof, voltage V of the synthesized wave obtained by synthesizing the waveforms of two different frequencies (that is, the wave obtained by synthesizing two sinusoidal waves having different frequencies) is applied to electromagnet 52, but the waveform of voltage V applied to electromagnet 52 may be a waveform in which two different waveforms have been superimposed, and various waveforms can be used. For example, voltage V having a waveform in which two different waveforms of a sine wave, a rectangular wave, a triangular wave, a sawtooth wave, and a trapezoidal wave have been superimposed can be applied to electromagnet 52.

Note that, in the present disclosure, even for waves having the same shape, waves having at least one of different frequencies, amplitudes, or phases are defined as waves different from each other. Thus, in the above exemplary embodiment and the variation thereof, since two waves illustrated as the synthesized waves are sine waves but have different frequencies, in the above exemplary embodiment and the variation thereof, the waves are different from each other.

In addition, specifications (for example, shape, size, layout, and the like) of the electromagnetic block, the magnetic block, and other details can also be changed as appropriate.

As described above, in the vibratory linear actuator according to the present disclosure, the first movable body and the second movable body can reciprocate with more complicated movement. Thus, the vibratory linear actuator according to the present disclosure can be used for as a part of a personal care product such as an electric toothbrush.

## Claims

1. A vibratory linear actuator comprising:
an electromagnetic block including an electromagnet; and
a magnetic block including a permanent magnet disposed to face the electromagnet in such a way that a gap is formed between the permanent magnet and the electromagnet,
wherein
the magnetic block is configured to be reciprocated in a first direction relatively with respect to the electromagnetic block by a periodically fluctuating magnetic field,
the magnetic block comprises:
a first movable body coupled to the electromagnetic block with a first spring, and
a second movable body coupled to the first movable body with a second spring, and
the first movable body and the second movable body are configured such that the first movable body and the second movable body reciprocate at a frequency at which an amplitude increases in an opposite phase while the first movable body and the second movable body reciprocate at a frequency at which an amplitude increases in the same phase, when a voltage having a waveform in which two different waveforms have been superimposed is applied to the electromagnet in a state where a thrust acting on the first movable body and a thrust acting on the second movable body are different from each other.

2. The vibratory linear actuator according to Claim 1, wherein
at least one of the first movable body or the second movable body is provided with the permanent magnet, and
the thrust acting on the first movable body and the thrust acting on the second movable body are set to be different from each other by setting a magnetic force of the first movable body and a magnetic force of the second movable body to be different from each other.

3. The vibratory linear actuator according to Claim 2, wherein
either the first movable body or the second movable body is provided with the permanent magnet.

4. The vibratory linear actuator according to any one of Claims 1 to 3, wherein a weight of the first movable body is different from a weight of the second movable body.

5. The vibratory linear actuator according to any one of Claims 1 to 3, wherein the electromagnet block included in the electromagnetic block is composed of one electromagnet.

6. The vibratory linear actuator according to any one of Claims 1 to 3, wherein the second movable body is coupled to the electromagnetic block with a third spring.

7. An electric toothbrush comprising:
the vibratory linear actuator according to any one of Claims 1 to 3; and
a handle including a brush and connected to the first movable body or the second movable body.

8. The electric toothbrush according to Claim 7, wherein
in a case where the handle is connected to the first movable body, weights of the first movable body and the second movable body are set in such a way that a weight of a first movable block including at least the first movable body and the handle and reciprocating together with the first movable body is substantially the same as a weight of a second movable block including at least the second movable body and reciprocating together with the second movable body, and
in a case where the handle is connected to the second movable body, the weights of the first movable body and the second movable body are set in such a way that the weight of the first movable block including at least the first movable body and reciprocating together with the first movable body is substantially the same as the weight of the second movable block including at least the second movable body and the handle and reciprocating together with the second movable body.
